# EUROPEAN PATENT APPLICATION

(11) **EP 4 832 134 A1**
(43) Date of publication of application: **28.10.2026**
(21) Application number: 24908042.5
(22) Date of filing: 17.12.2024
(51) Int. Cl.: H01M 10/0562, H01M 10/052

(54) **SOLID ELECTROLYTE AND ALL SOLID STATE BATTERY COMPRISING SAME**

(30) Priority: 18.12.2023 KR 20230185185
(71) Applicant: POSCO Holdings Inc., Pohang-si, Gyeongsangbuk-do 37859 (KR)
(72) Inventor: KWON, Ohmin, Pohang-si, Gyeongsangbuk-do 37859 (KR); NAM, Sang Cheol, Pohang-si, Gyeongsangbuk-do 37859 (KR); OH, Gwangseok, Pohang-si, Gyeongsangbuk-do 37859 (KR)
(74) Representative: Pfenning, Meinig & Partner mbB
(86) International application number: PCT/KR2024/020550
(87) International publication number: WO 2025/135759

(57) **Abstract**

The present invention relates to a sulfide-based solid electrolyte comprising a compound containing lithium (Li), phosphorus (P), sulfur (S), and a halogen element (D), and having an argyrodite-based crystal structure, wherein at least a portion of the crystal structure is doped with oxygen (O) and a transition metal element (M) consisting of Nb, Ta, V, or a combination thereof.

## Description

### [TECHNICAL FIELD]

The present invention relates to a solid electrolyte and an all-solid-state battery comprising the same.

### [BACKGROUND ART]

As research on safety issues and energy density of high-capacity batteries has attracted attention, all-solid-state batteries have been spotlighted as next-generation batteries.

The all-solid-state battery is a battery in which safety of the battery is secured by replacing a liquid electrolyte, which may cause explosion, with a solid electrolyte, thereby not using a flammable solvent in the battery, so that ignition or explosion due to reactions such as decomposition reactions of a conventional electrolyte solution does not occur at all.

As a solid electrolyte used in the all-solid-state battery, an inorganic solid electrolyte is generally used, and among these, a sulfide-based solid electrolyte having an argyrodite-based crystal structure has high ionic conductivity, and thus various studies are being conducted thereon.

Meanwhile, in the case of an all-solid-state battery, since lithium metal or a lithium alloy can be used as a negative electrode material, energy density relative to the mass and volume of the battery can be improved.

However, when lithium metal or a lithium alloy is used as the negative electrode material, as charging and discharging are repeatedly performed, lithium dendrites are formed on the surface of the negative electrode, and thus there is a problem in that a short circuit of the battery occurs.

### [DETAILED DESCRIPTION OF THE INVENTION]

### [Technical Problem]

Accordingly, an object of the present invention is to provide a solid electrolyte which is a sulfide-based solid electrolyte having an argyrodite-based crystal structure and which can suppress formation of lithium dendrites, and an all-solid-state battery comprising the same.

### [Technical Solution]

One embodiment of the present invention provides a sulfide-based solid electrolyte comprising a compound containing lithium (Li), phosphorus (P), sulfur (S), and a halogen element (D), and having an argyrodite-based crystal structure, wherein at least a portion of the crystal structure is doped with oxygen (O) and a transition metal element (M) consisting of Nb, Ta, V, or a combination thereof.

The compound may have a molar ratio of the transition metal element (M) to phosphorus (P) ([M]/[P]) of 0.01 to 1.1.

The compound may have a molar ratio of oxygen (O) to phosphorus (P) ([O]/[P]) of 0.03 to 2.5.

The compound may have a molar ratio of lithium (Li) to phosphorus (P) ([Li]/[P]) of 5.5 to 6.5.

The compound may have a molar ratio of sulfur (S) to phosphorus (P) ([S]/[P]) of 4.5 to 5.5.

The compound may have a molar ratio of the halogen element (D) to phosphorus (P) ([D]/[P]) of 0.5 to 1.5.

The compound may exhibit a first peak in a range of 15.4°≤2θ≤15.8° when analyzed by X-ray diffraction (XRD) pattern analysis.

The compound may exhibit a second peak in a range of 25.4°≤2θ≤25.7° when analyzed by X-ray diffraction (XRD) pattern analysis.

The compound may exhibit a third peak in a range of 34.7°≤2θ≤34.9° when analyzed by X-ray diffraction (XRD) pattern analysis.

The compound may have a ratio of an intensity of the second peak to an intensity of the first peak of 2.4 to 2.9.

The compound may have a ratio of an intensity of the third peak to the intensity of the first peak of 0.03 to 0.8.

The compound may be represented by the following Chemical Formula 1.

[Chemical Formula 1] Li₇ₐ₋ₐₓPₐM₂₋₂ₐS₆ₐ₋ₐₓO₅₋₅ₐDₐₓ

In Chemical Formula 1, 1≤x≤2, 0.65≤a≤0.995, M is a transition metal element consisting of Nb, Ta, V, or a combination thereof, and D is a halogen element consisting of F, Cl, Br, I, or a combination thereof.

In Chemical Formula 1, 0.8≤a≤0.96 may be satisfied.

Another embodiment of the present invention provides an all-solid-state battery comprising a positive electrode layer, a negative electrode layer, and a solid electrolyte layer positioned between the positive electrode layer and the negative electrode layer, wherein at least one of the positive electrode layer, the negative electrode layer, and the solid electrolyte layer comprises the above-described solid electrolyte.

### [Advantageous Effects]

The solid electrolyte according to an embodiment of the present invention has an argyrodite-based crystal structure, and at least a portion of the crystal structure is doped with oxygen (O) and a transition metal element (M) consisting of Nb, Ta, V, or a combination thereof. Accordingly, when applied to an all-solid-state battery using a lithium metal or lithium alloy negative electrode, formation of lithium dendrites can be suppressed, thereby preventing a short circuit of the battery caused by excessive generation of lithium dendrites.

### [BRIEF DESCRIPTION OF THE DRAWINGS]

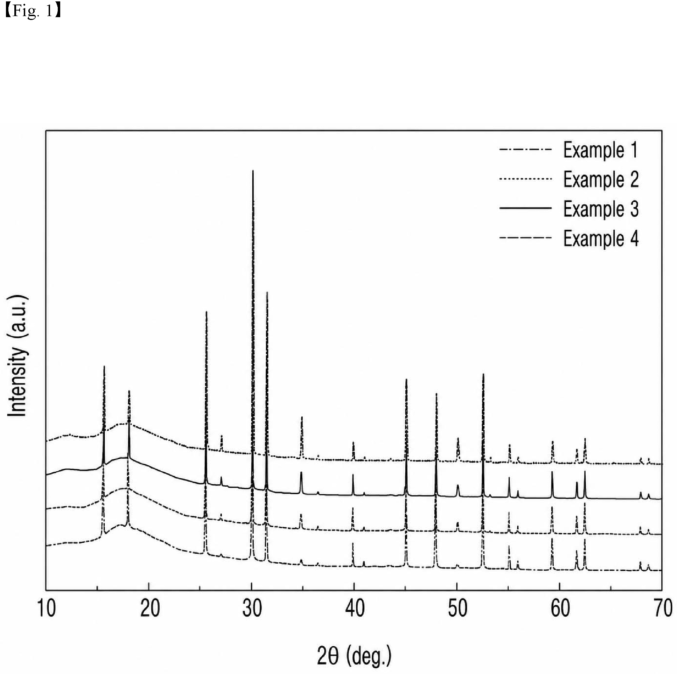

FIG. 1 is a graph showing X-ray diffraction pattern analysis results of solid electrolytes manufactured according to Examples 1 to 4.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the components described in the Markush-type expression, and means that one or more selected from the group consisting of the components is included.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### 1. Solid Electrolyte

A solid electrolyte according to an embodiment of the present invention contains lithium (Li), phosphorus (P), sulfur (S), and a halogen element (D), and comprises a compound having an argyrodite-based crystal structure. Accordingly, excellent ionic conductivity can be implemented.

At this time, at least a portion of the argyrodite-based crystal structure of the compound is doped with oxygen (O) and a transition metal element (M) consisting of Nb, Ta, V, or a combination thereof. In the present specification, "doping" may mean not only substituting some elements of a compound with new elements, but also that doped elements become constituent elements of a crystal phase of the compound.

Accordingly, when applied to an all-solid-state battery using a lithium metal or lithium alloy negative electrode, formation of lithium dendrites as charging and discharging proceed can be suppressed. Accordingly, occurrence of a short circuit of the battery due to excessive formation of lithium dendrites can be prevented. In addition, capacity characteristics of the battery can be improved.

More specifically, the compound may have a molar ratio of the transition metal element (M) to phosphorus (P) ([M]/[P]) of 0.01 to 1.1, and more specifically 0.08 to 0.4. When the molar ratio of the transition metal element (M) to phosphorus (P) ([M]/[P]) is too small, the above-mentioned dendrite formation suppression effect or battery capacity characteristic improvement effect by doping with the transition metal element may be insignificant. When the molar ratio of the transition metal element (M) to phosphorus (P) ([M]/[P]) is too large, M acts as an impurity phase, and thus the effect of suppressing formation of lithium dendrites and the effect of improving battery capacity characteristics may rather decrease, and the argyrodite crystal structure may be greatly deformed, thereby deteriorating ionic conductivity.

The compound may have a molar ratio of oxygen (O) to phosphorus (P) ([O]/[P]) of 0.03 to 2.5, and more specifically 0.2 to 0.8. When the molar ratio of oxygen (O) to phosphorus (P) ([O]/[P]) is too small, the above-mentioned dendrite formation suppression effect or battery capacity characteristic improvement effect by oxygen doping may be small. When the molar ratio of oxygen (O) to phosphorus (P) ([O]/[P]) is too large, the effect of suppressing formation of lithium dendrites and the effect of improving battery capacity characteristics may rather decrease, and the argyrodite crystal structure may be greatly deformed, thereby deteriorating ionic conductivity.

The compound may have a molar ratio of lithium (Li) to phosphorus (P) ([Li]/[P]) of 5.5 to 6.5, and more specifically 5.8 to 6.2. When the molar ratio of lithium (Li) to phosphorus (P) ([Li]/[P]) satisfies the above range, the argyrodite-based crystal structure is completely maintained, and ionic conductivity of the solid electrolyte or electrochemical characteristics of the battery can be more preferably implemented.

The compound may have a molar ratio of sulfur (S) to phosphorus (P) ([S]/[P]) of 4.5 to 5.5, and more specifically 4.8 to 5.2. When the molar ratio of sulfur (S) to phosphorus (P) ([S]/[P]) satisfies the above range, the argyrodite-based crystal structure is completely maintained, and ionic conductivity of the solid electrolyte or electrochemical characteristics of the battery can be more preferably implemented.

The compound may have a molar ratio of the halogen element (D) to phosphorus (P) ([D]/[P]) of 0.5 to 1.5, and more specifically 0.8 to 1.2. When the molar ratio of the halogen element (D) to phosphorus (P) ([D]/[P]) satisfies the above range, the argyrodite-based crystal structure is completely maintained, and ionic conductivity of the solid electrolyte or electrochemical characteristics of the battery can be more preferably implemented.

In addition, the halogen element (D) is not particularly limited as long as it is a halogen element, and may be, for example, F, Cl, Br, I, or a combination thereof.

However, from the viewpoint of stabilizing the structure of the solid electrolyte, ease of synthesis, and reduction of process cost, the halogen element (D) may be Cl.

In addition, from the viewpoint of more preferably implementing ionic conductivity, the halogen element (D) may further include at least one element selected from Br and I in addition to Cl, and more specifically, the halogen element (D) may include Cl and Br.

Meanwhile, the compound may exhibit a first peak in a range of 15.4°≤2θ≤15.8° when analyzed by X-ray diffraction (XRD) pattern analysis. The first peak appearing in the above range may be a peak appearing in an argyrodite-based crystal structure.

The compound may exhibit a second peak in a range of 25.4°≤2θ≤25.7° when analyzed by X-ray diffraction (XRD) pattern analysis. The second peak appearing in the above range may be a unique peak appearing as oxygen (O) and the transition metal element (M) consisting of Nb, Ta, V, or a combination thereof are additionally doped into the solid electrolyte compound according to the present invention.

The compound may exhibit a third peak in a range of 34.7°≤2θ≤34.9° when analyzed by X-ray diffraction (XRD) pattern analysis. The third peak appearing in the above range may also be a unique peak appearing as oxygen (O) and the transition metal element (M) consisting of Nb, Ta, V, or a combination thereof are additionally doped into the solid electrolyte compound according to the present invention.

At this time, the compound may have a ratio of an intensity of the second peak to an intensity of the first peak of 2.4 to 2.9, and more specifically 2.55 to 2.73. When the ratio of the intensity of the second peak to the intensity of the first peak satisfies the above range, oxygen (O) and the transition metal element (M) consisting of Nb, Ta, V, or a combination thereof are doped in an appropriate content, so that the above-mentioned dendrite formation suppression effect, battery capacity characteristic improvement effect, and good ionic conductivity implementation effect can be preferably implemented.

The compound may have a ratio of an intensity of the third peak to the intensity of the first peak of 0.03 to 0.8, and more specifically 0.3 to 0.65. When the ratio of the intensity of the third peak to the intensity of the first peak satisfies the above range, oxygen (O) and the transition metal element (M) consisting of Nb, Ta, V, or a combination thereof are doped in an appropriate content, so that the above-mentioned dendrite formation suppression effect, battery capacity characteristic improvement effect, and good ionic conductivity implementation effect can be preferably implemented.

More specifically, the compound may be represented by the following Chemical Formula 1.

[Chemical Formula 1] Li₇ₐ₋ₐₓPₐM₂₋₂ₐS₆ₐ₋ₐₓO₅₋₅ₐDₐₓ

In Chemical Formula 1, 1≤x≤2, 0.65≤a≤0.995, M is a transition metal element consisting of Nb, Ta, V, or a combination thereof, and D is a halogen element consisting of F, Cl, Br, I, or a combination thereof.

In Chemical Formula 1, x satisfies 1≤x≤2. When x is too small, ionic conductivity of the solid electrolyte may deteriorate. When x is too large, ionic conductivity of the solid electrolyte is improved, but electrochemical characteristics such as moisture stability and capacity characteristics of the battery may deteriorate.

In Chemical Formula 1, a satisfies 0.65≤a≤0.995, and more specifically may satisfy 0.8≤a≤0.96. Since a is inversely proportional to the doping amount of the transition metal element or oxygen, when a is too small, due to excessive doping of the transition metal element or oxygen, the dendrite formation suppression effect and battery capacity characteristic improvement effect may rather decrease, and ionic conductivity of the solid electrolyte may deteriorate. When a is too large, the dendrite formation suppression effect or battery capacity characteristic improvement effect by doping with the transition metal element or oxygen may be insignificant.

### 2. Method for Manufacturing Solid Electrolyte

Another embodiment of the present invention provides a method for manufacturing a sulfide-based solid electrolyte, the method comprising: mixing a lithium raw material, a phosphorus raw material, a halogen element raw material, and a doping raw material to form a mixture; and heat-treating the mixture to form a sulfide-based solid electrolyte having an argyrodite-based crystal structure, wherein the doping raw material comprises a transition metal (M) raw material. Here, the transition metal (M) is a transition metal element consisting of Nb, Ta, V, or a combination thereof.

Hereinafter, the method for manufacturing a sulfide-based solid electrolyte according to another embodiment of the present invention will be described step by step.

First, a lithium raw material, a phosphorus raw material, a halogen element raw material, and a doping raw material are mixed to form a mixture. At this time, the doping raw material comprises a transition metal (M) raw material. Here, the transition metal (M) is a transition metal element consisting of Nb, Ta, V, or a combination thereof.

The lithium raw material may be, for example, Li₂S, Li₂S₂, or a combination thereof, but is not necessarily limited thereto.

The phosphorus raw material may be, for example, P₂S₅, P₂O₅, or a combination thereof, but is not necessarily limited thereto.

The halogen element raw material may be, for example, LiF, LiCl, LiBr, LiI, or a combination thereof, but is not necessarily limited thereto. More specifically, the halogen element raw material may be LiCl.

The transition metal (M) raw material is not particularly limited as long as it is a compound containing the transition metal (M), and more specifically may be a transition metal (M) oxide. Accordingly, oxygen (O) can be doped into the argyrodite compound together with the transition metal (M).

The transition metal (M) oxide may be, for example, Nb₂O₅, Ta₂O₅, V₂O₅, or a combination thereof.

Input amounts of the lithium raw material, the phosphorus raw material, the halogen element raw material, and the doping raw material may be appropriately stoichiometrically adjusted and introduced according to a target composition of the sulfide-based solid electrolyte.

The mixing may be performed by mechanical mixing or chemical mixing.

The mechanical mixing may be performed, for example, by a method such as a planetary mill, a paint shaker, a ball mill, a bead mill, a homogenizer, a hammer mill, a turbo mill, a disk mill, a planetary mill, or mechanofusion.

The chemical mixing may be performed, for example, by a melt-quenching method.

The mixing may be performed for 4 hours to 12 hours, specifically 6 hours to 10 hours, and more specifically 7 hours to 9 hours. When the mixing time is too short, a problem may occur in that mixing is insufficient. When the mixing time is too long, all mixing is completed after a certain time, and even if mixing is further performed, the mixed state remains the same, causing a problem in terms of process efficiency.

The mixing may be performed at a rotation speed of 100 rpm to 500 rpm, specifically 150 rpm to 450 rpm, and more specifically 200 rpm to 400 rpm. When the rotation speed is too slow, balls may not enter the inside of the powder particles, causing a problem in that powder particles are not sufficiently mixed overall or energy is low, so that pulverization of the powder particles is insufficient. On the other hand, when the rotation speed is too fast, the powder particles are biased to one place, causing a problem in that uniform mixing is insufficient.

Next, if necessary, the method may optionally further include, after forming the mixture, compressing the mixture to form a pellet.

At this time, the compression may be performed at a pressure of 100 MPa to 500 MPa, specifically 150 MPa to 450 MPa, and more specifically 200 MPa to 400 MPa. When the pressure is too low, insufficient bonding between powder particles may occur, resulting in high interfacial resistance. On the other hand, when the pressure is too high, bonding between powder particles is already achieved, and even if additional pressure is applied, the bonding state does not change, causing a problem in terms of process efficiency. Therefore, it is preferable in terms of productivity to form a pellet at an appropriate pressure.

Next, the mixture is heat-treated to form a sulfide-based solid electrolyte having an argyrodite-based crystal structure.

At this time, the heat treatment may be performed at a temperature of 400°C to 700°C, and more specifically 500°C to 600°C. When the heat treatment temperature is too low, synthesis of a solid electrolyte having an argyrodite-based crystal structure may not sufficiently occur, or the solid electrolyte may be synthesized into an amorphous crystal structure, thereby reducing ionic conductivity of the solid electrolyte. When the heat treatment temperature is too high, elements constituting the solid electrolyte may be vaporized, resulting in loss of the solid electrolyte, or an impurity phase may be generated, thereby reducing ionic conductivity of the solid electrolyte.

In addition, the heat treatment may be performed for 2 hours to 8 hours, and more specifically 3 hours to 5 hours. When the heat treatment time is too short, synthesis of a solid electrolyte having an argyrodite-based crystal structure may not sufficiently occur, or the solid electrolyte may be synthesized into an amorphous crystal structure, thereby reducing ionic conductivity of the solid electrolyte. When the heat treatment time is too long, elements constituting the solid electrolyte may be vaporized, resulting in loss of the solid electrolyte, or an impurity phase may be generated, thereby reducing ionic conductivity of the solid electrolyte.

In addition, the heat treatment may be performed under an inert gas atmosphere. As the heat treatment is performed under an inert gas atmosphere, there may be an advantage of blocking contact with atmospheric moisture. The inert gas atmosphere may be, for example, an Ar, N₂, H₂, or He atmosphere, and more specifically an Ar atmosphere.

### 3. All-Solid-State Battery

Still another embodiment of the present invention provides an all-solid-state battery comprising a positive electrode layer, a negative electrode layer, and a solid electrolyte layer positioned between the positive electrode layer and the negative electrode layer, wherein at least one of the positive electrode layer, the negative electrode layer, and the solid electrolyte layer comprises the above-described solid electrolyte.

### (Positive Electrode Layer)

More specifically, the positive electrode layer may include a positive electrode current collector and a positive electrode active material layer disposed on the positive electrode current collector.

The positive electrode active material layer may include, for example, a positive electrode active material and optionally further include a solid electrolyte as necessary. The solid electrolyte included in the positive electrode active material layer may be the same as or different from the solid electrolyte according to an embodiment of the present invention, and may be the same as or different from the solid electrolyte included in the solid electrolyte layer.

The positive electrode active material is a material capable of reversibly absorbing and desorbing lithium ions. The positive electrode active material may be, for example, lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, and lithium iron phosphate, nickel sulfide, copper sulfide, lithium sulfide, iron oxide, vanadium oxide, or the like, but is not necessarily limited thereto, and any material used as a positive electrode active material in the art may be used. The positive electrode active materials may be used alone or as a mixture of two or more thereof.

The lithium transition metal oxide may be, for example, a compound represented by any one of chemical formulas of LiₐA_{1-β}B_{β}D₂ (wherein, in the formula, 0.90 ≤ a ≤ 1, and 0 ≤ b ≤ 0.5); LiₐE_{1-β}B_{β}O₂-*c*D*c* (wherein, in the formula, 0.90 ≤ a ≤ 1, 0 ≤ b ≤ 0.5, and 0 ≤ c ≤ 0.05); LiE_{2-β}B_{β}O₄-*c*D*c* (wherein, in the formula, 0 ≤ b ≤ 0.5, and 0 ≤ c ≤ 0.05); LiₐNi_{1-β}-*c*Co_{β}B*c*Dα (wherein, in the formula, 0.90 ≤ a ≤ 1, 0 ≤ b ≤ 0.5, 0 ≤ c ≤ 0.05, and 0 < α ≤ 2); LiₐNi_{1-β}-*c*Co_{β}B*c*O₂-αFα (wherein, in the formula, 0.90 ≤ a ≤ 1, 0 ≤ b ≤ 0.5, 0 ≤ c ≤ 0.05, and 0 < a < 2); LiₐNi_{1-β}-*c*Co_{β}B*c*O₂-αF₂ (wherein, in the formula, 0.90 ≤ a ≤ 1, 0 ≤ b ≤ 0.5, 0 ≤ c ≤ 0.05, and 0 < α < 2); LiₐNi_{1-β}-*c*Mn_{β}B*c*Dα (wherein, in the formula, 0.90 ≤ a ≤ 1, 0 ≤ b ≤ 0.5, 0 ≤ c ≤ 0.05, and 0 < α ≤ 2); LiₐNi_{1-β}-*c*Mn_{β}B*c*O₂-αFα (wherein, in the formula, 0.90 ≤ a ≤ 1, 0 ≤ b ≤ 0.5, 0 ≤ c ≤ 0.05, and 0 < α < 2); LiₐNi_{1-β}-*c*Mn_{β}B*c*O₂-αF₂ (wherein, in the formula, 0.90 ≤ a ≤ 1, 0 ≤ b ≤ 0.5, 0 ≤ c ≤ 0.05, and 0 < α < 2); LiₐNi_{β}E*c*G*d*O₂ (wherein, in the formula, 0.90 ≤ a ≤ 1, 0 ≤ b ≤ 0.9, 0 ≤ c ≤ 0.5, and 0.001 ≤ d ≤ 0.1); LiₐNi_{β}Co*c*Mn*d*GₑO₂ (wherein, in the formula, 0.90 ≤ a ≤ 1, 0 ≤ b ≤ 0.9, 0 ≤ c ≤ 0.5, 0 ≤ d ≤0.5, and 0.001 ≤ e ≤ 0.1); LiₐNiG_{β}O₂ (wherein, in the formula, 0.90 ≤ a ≤ 1, and 0.001 ≤ b ≤ 0.1); LiₐCoG_{β}O₂ (wherein, in the formula, 0.90 ≤ a ≤ 1, and 0.001 ≤ b ≤ 0.1); LiₐMnG_{β}O₂ (wherein, in the formula, 0.90 ≤ a ≤ 1, and 0.001 ≤ b ≤ 0.1); LiₐMn₂G_{β}O₄ (wherein, in the formula, 0.90 ≤ a ≤ 1, and 0.001 ≤ b ≤ 0.1); QO₂; QS₂; LiQS₂; V₂O₅; LiV₂O₅; LiIO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄. In these compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. It is also possible to use a compound in which a coating layer is added to the surface of such a compound, and it is also possible to use a mixture of the above-described compound and a compound to which a coating layer is added. The coating layer added to the surface of such a compound includes, for example, a coating element compound such as an oxide of a coating element, a hydroxide of a coating element, an oxyhydroxide of a coating element, an oxycarbonate of a coating element, or a hydroxycarbonate of a coating element. The compound constituting such a coating layer is amorphous or crystalline. The coating element included in the coating layer may be Mg, Al, Co, K, Na, Ca, Si, Ti, V, Sn, Ge, Ga, B, As, Zr, or a mixture thereof. A method for forming the coating layer is selected within a range that does not adversely affect physical properties of the positive electrode active material. The coating method may be, for example, spray coating, dipping, or the like. A specific coating method may be well understood by those skilled in the art, and thus a detailed description thereof will be omitted.

The positive electrode active material layer may include, for example, a binder. The binder may be, for example, styrene butadiene rubber (SBR), polytetrafluoroethylene, polyvinylidene fluoride, polyethylene, or the like, but is not limited thereto, and any material used as a binder in the art may be used.

The positive electrode active material layer may include, for example, a conductive material. The conductive material may be, for example, graphite, carbon black, acetylene black, Ketjen black, carbon fiber, metal powder, or the like, but is not limited thereto, and any material used as a conductive material in the art may be used.

The positive electrode active material layer may further include, for example, additives such as a filler, a coating agent, a dispersing agent, and an ion-conductive auxiliary agent in addition to the above-described positive electrode active material, solid electrolyte, binder, and conductive material.

As the filler, coating agent, dispersing agent, ion-conductive auxiliary agent, and the like that may be included in the positive electrode active material layer, known materials generally used in electrodes of all-solid-state secondary batteries may be used.

As the positive electrode current collector, for example, a plate, foil, or the like made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used. A thickness of the positive electrode current collector may be, for example, 1 µm to 100 µm, 1 µm to 50 µm, 5 µm to 25 µm, or 10 µm to 20 µm.

### (Negative Electrode Layer)

More specifically, the negative electrode layer may include a negative electrode current collector and a negative electrode active material layer disposed on the negative electrode current collector.

The negative electrode active material layer may include, for example, a negative electrode active material and a binder, and may optionally further include a solid electrolyte as necessary.

The negative electrode active material may include, for example, a carbon-based negative electrode active material, a metal/metalloid negative electrode active material, or a combination thereof.

The carbon-based negative electrode active material may be amorphous carbon, crystalline carbon, or a mixture or composite thereof. The amorphous carbon may be, for example, carbon black (CB), acetylene black (AB), furnace black (FB), Ketjen black (KB), graphene, or the like, but is not necessarily limited thereto, and any material classified as amorphous carbon in the art may be used. Amorphous carbon is carbon having no crystallinity or very low crystallinity and is distinguished from crystalline carbon or graphite-based carbon. The crystalline carbon may be, for example, natural graphite, artificial graphite, or a combination thereof.

The metal/metalloid negative electrode active material includes at least one selected from the group consisting of lithium (Li), gold (Au), platinum (Pt), indium (In), palladium (Pd), silicon (Si), silver (Ag), aluminum (Al), bismuth (Bi), tin (Sn), and zinc (Zn), but is not necessarily limited thereto, and any metal negative electrode active material or metalloid negative electrode active material used in the art to form an alloy or compound with lithium may be used.

The binder included in the negative electrode active material layer may be, for example, styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, or the like, but is not necessarily limited thereto, and any material used as a binder in the art may be used. The binder may be composed of a single binder or a plurality of different binders.

Since the negative electrode active material layer includes the binder, the negative electrode active material layer is stabilized on the negative electrode current collector. In addition, cracking of the negative electrode active material layer is suppressed despite a volume change and/or relative position change of the negative electrode active material layer during charging and discharging.

The negative electrode active material layer may further include additives used in conventional all-solid-state batteries, for example, a filler, a coating agent, a dispersing agent, an ion-conductive auxiliary agent, and the like.

The all-solid-state battery may further include a second negative electrode active material layer disposed between the negative electrode current collector and the negative electrode active material layer by charging. The second negative electrode active material layer may be precipitated between the negative electrode current collector and the negative electrode current collector during a charging process, or may be further disposed on the negative electrode active material layer during electrode assembly. Such a second negative electrode active material layer may be a metal layer including lithium or a lithium alloy. The lithium alloy may be, for example, a Li-Al alloy, Li-Sn alloy, Li-In alloy, Li-Ag alloy, Li-Au alloy, Li-Zn alloy, Li-Ge alloy, Li-Si alloy, or the like, but is not limited thereto, and any lithium alloy used in the art may be used. The second negative electrode active material layer may be composed of one of these alloys and/or lithium, or may be composed of several types of alloys and/or lithium.

The negative electrode current collector may be made of, for example, a material that does not react with lithium, that is, does not form either an alloy or a compound. The negative electrode current collector may include, for example, copper (Cu), stainless steel, titanium (Ti), iron (Fe), cobalt (Co), nickel (Ni), or the like, but is not necessarily limited thereto, and any material used as an electrode current collector in the art may be used. The negative electrode current collector may be composed of one of the above-described metals, or may be composed of an alloy or coating material of two or more metals. The negative electrode current collector may be, for example, in the form of a plate or foil.

When the negative electrode active material layer includes a solid electrolyte, the solid electrolyte included in the negative electrode active material layer may be the same as or different from the solid electrolyte according to an embodiment of the present invention, and may be the same as or different from the solid electrolyte included in the solid electrolyte layer.

### (Solid Electrolyte Layer)

The solid electrolyte layer may be manufactured by mixing and drying the above-described solid electrolyte and a binder, or may be manufactured by rolling the above-described solid electrolyte powder into a predetermined form at a pressure of 1 ton to 10 tons.

At this time, the solid electrolyte may be in the form of powder or a molded product. The solid electrolyte in the form of a molded product may be, for example, in the form of a pellet, a sheet, a thin film, or the like, but is not necessarily limited thereto, and may have various forms depending on the use.

The solid electrolyte layer may further include, as necessary, a conventional sulfide-based solid electrolyte and/or oxide-based solid electrolyte in addition to the above-described solid electrolyte.

The binder may be, for example, styrene butadiene rubber (SBR), polytetrafluoroethylene, polyvinylidene fluoride, polyethylene, polyvinyl alcohol, or the like, but is not limited thereto, and any material used as a binder in the art may be used. The binder of the solid electrolyte layer may be the same as or different from binders of the positive electrode layer and the negative electrode layer.

Still another embodiment of the present invention provides an electric vehicle comprising the all-solid-state battery.

Hereinafter, embodiments of the present invention will be described in more detail through Examples. However, the following Examples are only preferred embodiments of the present invention, and the present invention is not limited by the following Examples.

### Example 1: Preparation of Li₅.₉₄P₀.₉₉Nb₀.₀₂S₄.₉₅O₀.₀₅Cl₀.₉₉ Solid Electrolyte

### (1) Preparation of Solid Electrolyte

(Mixing) Li₂S, P₂S₅, LiCl, and Nb₂O₅, which were reactants, were introduced according to a stoichiometric ratio such that x=1 and a=0.99 in the final product, Li₇ₐ₋ₐₓPₐM₂₋₂ₐS₆ₐ₋ₐₓO₅₋₅ₐDₐₓ solid electrolyte, and mixed using a planetary mill at 300 rpm for about 8 hours to form a mixture.

(Pellet Preparation) Next, pressure of 300 MPa was applied to the mixture to form a pellet.

(Heat Treatment) Next, the pellet was heat-treated at 550°C for about 4 hours in an argon (Ar) atmosphere to prepare a Li_{5.94}P_{0.99}Nb_{0.02}S_{4.95}O_{0.05}Cl_{0.99} solid electrolyte.

### (2) Manufacture of All-Solid-State Battery

An all-solid-state battery was manufactured using the prepared solid electrolyte as an electrolyte, Li₁Ni_{0.8}Co_{0.1}Mn_{0.1}O₂ as a positive electrode active material, and an In-Li alloy as a negative electrode active material.

### Comparative Example 1: Preparation of Li₆PS₅Cl Solid Electrolyte

Li₂S, P₂S₅, and LiCl, which were reactants, were mixed using a planetary mill at 300 rpm for about 8 hours to form a mixture.

Next, pressure of 300 MPa was applied to the mixture to form a pellet.

Next, the pellet was heat-treated at 550°C for about 4 hours in an argon (Ar) atmosphere to prepare a Li₆PS₅Cl solid electrolyte.

### Other Examples and Reference Examples

Solid electrolytes and all-solid-state batteries were manufactured in the same manner as in Example 1, except that, in the mixing step, Li₂S, P₂S₅, LiCl, and Nb₂O₅, which were reactants, were introduced according to a stoichiometric ratio such that x and a in the final product, Li₇ₐ₋ₐₓPₐM₂₋₂ₐS₆ₐ₋ₐₓO₅₋₅ₐDₐₓ solid electrolyte, became values described in Table 1 below.

Table 1 below shows x and a values of Examples, Comparative Example, and Reference Examples, and compositions of solid electrolytes manufactured accordingly.

**[Table 1]**

| | x | a | Composition | | | | | |
|---|---|---|---|---|---|---|---|---|
| | | | [Li] | [P] | [Nb] | [S] | [O] | [Cl] |
| Comparative Example 1 | 1 | 1 | 6 | 1 | 0 | 5 | 0 | 1 |
| Example 1 | 1 | 0.99 | 5.94 | 0.99 | 0.02 | 4.95 | 0.05 | 0.99 |
| Example 2 | 1 | 0.97 | 5.82 | 0.97 | 0.06 | 4.85 | 0.15 | 0.97 |
| Example 3 | 1 | 0.95 | 5.7 | 0.95 | 0.1 | 4.75 | 0.25 | 0.95 |
| Example 4 | 1 | 0.9 | 5.4 | 0.9 | 0.2 | 4.5 | 0.5 | 0.9 |
| Example 5 | 1 | 0.7 | 4.2 | 0.7 | 0.6 | 3.5 | 1.5 | 0.7 |
| Reference Example 1 | 1 | 0.6 | 3.6 | 0.6 | 0.8 | 3 | 2 | 0.6 |
| Reference Example 2 | 1 | 0.5 | 3 | 0.5 | 1 | 2.5 | 2.5 | 0.5 |

| | | | | | | | | |
|---|---|---|---|---|---|---|---|---|
| (In Table 1, [Li], [P], [Nb], [S], [O], and [Cl] each represent a molar ratio with respect to 1 mol of the manufactured solid electrolyte.) | | | | | | | | |

**[Table 2]**

| | x | a | Inter-Element Molar Ratio | | | | | |
|---|---|---|---|---|---|---|---|---|
| | | | [Li]/[P] | [P]/[P] | [Nb]/[P] | [O]/[P] | [S]/[P] | [Cl]/[P] |
| Comparative Example 1 | 1 | 1 | 6 | 1 | 0.000 | 0.000 | 5 | 1 |
| Example 1 | 1 | 0.99 | 6 | 1 | 0.020 | 0.051 | 5 | 1 |
| Example 2 | 1 | 0.97 | 6 | 1 | 0.062 | 0.155 | 5 | 1 |
| Example 3 | 1 | 0.95 | 6 | 1 | 0.105 | 0.263 | 5 | 1 |
| Example 4 | 1 | 0.9 | 6 | 1 | 0.222 | 0.556 | 5 | 1 |
| Example 5 | 1 | 0.7 | 6 | 1 | 0.857 | 2.143 | 5 | 1 |
| Reference Example 1 | 1 | 0.6 | 6 | 1 | 1.333 | 3.333 | 5 | 1 |
| Reference Example 2 | 1 | 0.5 | 6 | 1 | 2.000 | 5.000 | 5 | 1 |

Table 3 below summarizes results of X-ray diffraction analysis and ionic conductivity of the solid electrolytes according to Experimental Examples 1 and 2 described below, and results of evaluating short-circuit C-rate, initial discharge capacity, and lifespan characteristics of the all-solid-state batteries.

**[Table 3]**

| | Solid Electrolyte | | | | | | All-Solid-State Battery | | |
|---|---|---|---|---|---|---|---|---|---|
| | XRD | | | | | Ionic Conductivity | Short-Circuit C-rate | Discharge Capacity | Lifespan |
| | First Peak Appearance | Second Peak Appearance | Third Peak Appearance | Second Peak/First Peak Intensity Ratio | Third Peak/First Peak Intensity Ratio | mS cm-1 | % | mAhg⁻¹ | % |
| Comparative Example 1 | O | X | X | 0 | 0 | 2.66 | 0.5 | 191.2 | 91 |
| Example 1 | O | O | O | 2.82 | 0.05 | 2.54 | 2 | 191.8 | 93 |
| Example 2 | O | O | O | 2.75 | 0.21 | 2.22 | 2 | 193.7 | 94 |
| Example 3 | O | O | O | 2.71 | 0.34 | 1.87 | 5 | 192.6 | 95 |
| Example 4 | O | O | O | 2.69 | 0.62 | 1.49 | 5 | 192.3 | 93 |
| Example 5 | O | O | O | 2.51 | 0.7 | 0.92 | 2 | 180.6 | 72 |
| Reference Example 1 | O | O | O | 1.92 | 1.3 | 0.72 | 0.5 | 171.6 | 70 |
| Reference Example 2 | O | O | O | 1.41 | 1.6 | 0.16 | 0.5 | 164.2 | 77 |

### Experimental Example 1: XRD Analysis and Ionic Conductivity Evaluation of Solid Electrolyte

### (1) XRD Analysis of Solid Electrolyte

X-ray diffraction pattern analysis was performed on the solid electrolyte to evaluate whether peaks appeared in a range of 15.4°≤2θ≤15.8° (first peak), a range of 25.4°≤2θ≤25.7° (second peak), and a range of 34.7°≤2θ≤34.9° (third peak), and at this time, a ratio of the intensity of the second peak to the intensity of the first peak and a ratio of the intensity of the third peak to the intensity of the first peak were evaluated. At this time, XRD analysis graphs of Examples 1 to 4 are shown in FIG. 1.

### (2) Evaluation of Ionic Conductivity (30°C, 0.1 C)

The manufactured solid electrolyte was pulverized and then manufactured into a pellet under a pressure of 300 MPa. Thereafter, a cell was manufactured under a pressure of 70 MPa using SUS as a working electrode. Thereafter, impedance was measured by applying a voltage of 10 mV at 30°C.

Referring to Table 3, it was confirmed that, in the case of Examples and Reference Examples doped with Nb and O, the second peak and the third peak appeared together with the first peak. In addition, it was confirmed that as the doping amount of Nb and O increased, the ratio of the intensity of the second peak to the intensity of the first peak decreased, and the ratio of the intensity of the third peak to the intensity of the first peak increased.

On the other hand, in the case of Comparative Example 1 having a basic argyrodite composition in which Nb and O were not doped, it was confirmed that only the first peak appeared, and the second peak and the third peak did not appear.

When ionic conductivity was examined, it was confirmed that as the doping amount of Nb and O in the solid electrolyte increased, the ionic conductivity decreased compared with Comparative Example 1 having the basic argyrodite composition. When this is interpreted together with Experimental Example described below, it was confirmed that rather than indiscriminately increasing the doping amount of Nb and O, when doping is performed in an appropriate amount, it is possible to implement good ionic conductivity of the solid electrolyte together with a short-circuit prevention effect, a discharge capacity improvement effect, and a lifespan improvement effect.

### Experimental Example 2: Evaluation of Electrochemical Characteristics of All-Solid-State Battery

### (1) Evaluation of Initial Discharge Capacity

At room temperature (25°C), charging was performed at 0.1 C up to 4.25 V (vs. Li⁺/Li), and application of charging current was terminated by setting a current amount of 0.02 C at the corresponding voltage. Under the same conditions, after discharging was performed at a current amount of 0.1 C down to 2.50 V (vs. Li⁺/Li), initial discharge capacity was evaluated.

### (2) Evaluation of Lifespan Characteristics

After a formation cycle was performed at 0.1 C, a percentage of discharge capacity at the 50th cycle relative to discharge capacity at the first cycle was obtained when the first cycle was performed at a current density of 0.5 C.

### (3) Evaluation of Short-Circuit C-rate

An all-solid-state battery was manufactured, and short-circuit C-rate was evaluated.

When the short-circuit C-rate was evaluated, it was confirmed that Examples and Reference Examples doped with Nb and O had an improved short-circuit prevention effect compared with Comparative Example 1 having the basic argyrodite composition. In particular, it was confirmed that when Nb and O were doped in an appropriate amount, that is, when the molar ratio of niobium (Nb) to phosphorus (P) ([Nb]/[P]), the molar ratio of oxygen (O) to phosphorus (P) ([O]/[P]), or the value of a was controlled within an appropriate range, the short-circuit prevention effect was more preferably implemented.

When initial discharge capacity was evaluated, it was confirmed that as the doping amount of Nb and O increased, the initial discharge capacity improved compared with Comparative Example 1 having the basic argyrodite composition and then deteriorated again. Therefore, it was confirmed that when Nb and O were doped in an appropriate amount, that is, when the molar ratio of niobium (Nb) to phosphorus (P) ([Nb]/[P]), the molar ratio of oxygen (O) to phosphorus (P) ([O]/[P]), or the value of a was controlled within an appropriate range, capacity characteristics were more preferably implemented.

When lifespan characteristics were evaluated, it was confirmed that as the doping amount of Nb and O increased, lifespan characteristics improved compared with Comparative Example 1 having the basic argyrodite composition and then deteriorated again. Therefore, it was confirmed that when Nb and O were doped in an appropriate amount, that is, when the molar ratio of niobium (Nb) to phosphorus (P) ([Nb]/[P]), the molar ratio of oxygen (O) to phosphorus (P) ([O]/[P]), or the value of a was controlled within an appropriate range, lifespan characteristics were more preferably implemented.

Although preferred embodiments of the present invention have been described above, the present invention is not limited thereto, and may be modified and practiced in various ways within the scope of the claims, the detailed description of the invention, and the accompanying drawings, and it is obvious that such modifications also belong to the scope of the present invention.

Therefore, the substantial scope of rights of the present invention should be defined by the appended claims and equivalents thereof.

## Claims

1. A sulfide-based solid electrolyte comprising a compound containing lithium (Li), phosphorus (P), sulfur (S), and a halogen element (D), and having an argyrodite-based crystal structure,
wherein at least a portion of the crystal structure is doped with oxygen (O) and a transition metal element (M) consisting of Nb, Ta, V, or a combination thereof.

2. The sulfide-based solid electrolyte of claim 1,
wherein the compound has a molar ratio of the transition metal element (M) to phosphorus (P) ([M]/[P]) of 0.01 to 1.1.

3. The sulfide-based solid electrolyte of claim 1,
wherein the compound has a molar ratio of oxygen (O) to phosphorus (P) ([O]/[P]) of 0.03 to 2.5.

4. The sulfide-based solid electrolyte of claim 1,
wherein the compound has a molar ratio of lithium (Li) to phosphorus (P) ([Li]/[P]) of 5.5 to 6.5.

5. The sulfide-based solid electrolyte of claim 1,
wherein the compound has a molar ratio of sulfur (S) to phosphorus (P) ([S]/[P]) of 4.5 to 5.5.

6. The sulfide-based solid electrolyte of claim 1,
wherein the compound has a molar ratio of the halogen element (D) to phosphorus (P) ([D]/[P]) of 0.5 to 1.5.

7. The sulfide-based solid electrolyte of claim 1,
wherein the compound exhibits a first peak in a range of 15.4°≤2θ≤15.8° when analyzed by X-ray diffraction (XRD) pattern analysis.

8. The sulfide-based solid electrolyte of claim 7,
wherein the compound exhibits a second peak in a range of 25.4°≤2θ≤25.7° when analyzed by X-ray diffraction (XRD) pattern analysis.

9. The sulfide-based solid electrolyte of claim 7,
wherein the compound exhibits a third peak in a range of 34.7°≤2θ≤34.9° when analyzed by X-ray diffraction (XRD) pattern analysis.

10. The sulfide-based solid electrolyte of claim 8,
wherein the compound has a ratio of an intensity of the second peak to an intensity of the first peak of 2.4 to 2.9.

11. The sulfide-based solid electrolyte of claim 9,
wherein the compound has a ratio of an intensity of the third peak to an intensity of the first peak of 0.03 to 0.8.

12. The sulfide-based solid electrolyte of claim 1,
wherein the compound is represented by the following Chemical Formula 1:
[Chemical Formula 1] Li₇ₐ₋ₐₓPₐM₂₋₂ₐS₆ₐ₋ₐₓO₅₋₅ₐDₐₓ
wherein, in Chemical Formula 1, 1≤x≤2, 0.65≤a≤0.995, M is a transition metal element consisting of Nb, Ta, V, or a combination thereof, and D is a halogen element consisting of F, Cl, Br, I, or a combination thereof.

13. The sulfide-based solid electrolyte of claim 12,
wherein 0.8≤a≤0.96.

14. An all-solid-state battery comprising:
a positive electrode layer;
a negative electrode layer; and
a solid electrolyte layer positioned between the positive electrode layer and the negative electrode layer,
wherein at least one of the positive electrode layer, the negative electrode layer, and the solid electrolyte layer comprises the solid electrolyte according to claim 1.
